# FASCICULE DE BREVET EUROPEEN

(11) **EP 3 400 390 B1**
(45) Date de publication et mention de la délivrance du brevet: **13.07.2022**
(21) Numéro de dépôt: 16819344.9
(22) Date de dépôt: 01.12.2016
(51) Int. Cl.: F16B 41/00, G05G 1/36

(54) **DISPOSITIF FONCTIONNEL À DOUILLE SUPÉRIEURE À GRIFFE AVANT ET RAMPE D'ENGAGEMENT**
FUNKTIONELLE VORRICHTUNG MIT OBERER STECKDOSE MIT EINER FRONTKRALLE UND EINEM EINSCHUBGEFÄLLE
FUNCTIONAL DEVICE WITH UPPER SOCKET HAVING A FRONT CLAW AND AN INSERTION SLOPE

(30) Priorité: 07.01.2016 FR 1650114
(43) Date de publication de la demande: 14.11.2018
(73) Titulaire: PSA Automobiles SA, 78300 Poissy (FR)
(72) Inventeur: VOISIN, Jean Philippe, 90350 Evette Salbert (FR); GAERTNER MERCIER, Catherine, 68290 Masevaux (FR); TRICOT, Arnaud, 70400 Frahier et Chatebier (FR)
(86) Numéro de dépôt international: PCT/FR2016/053168
(87) Numéro de publication internationale: WO 2017/118784

(56) Documents cités:
- AU-B1- 157 520
- DE-A1- 3 330 269
- FR-A1- 2 857 761
- FR-A1- 2 967 795
- FR-A1- 3 014 075

## Description

L'invention concerne le pré-maintien de certains dispositifs fonctionnels pendant leur phase de solidarisation à une paroi inclinée d'un système.

Dans certains domaines, comme par exemple celui des véhicules (éventuellement de type automobile), la solidarisation d'un dispositif fonctionnel à des vis d'une paroi inclinée nécessite une phase intermédiaire de pré-maintien. Plus précisément, un technicien commence par rapprocher le dispositif fonctionnel de la paroi jusqu'à ce que des douilles d'une embase située dans sa partie arrière soient placées devant les extrémités libres des vis de cette paroi. Puis, le technicien fait traverser les douilles par les vis jusqu'à ce que le dispositif fonctionnel soit supporté par les vis et se retrouve ainsi pré-maintenu avant d'être solidarisé fixement par rapport à la paroi inclinée par vissage d'écrous sur les extrémités libres des vis.

Lorsque le dispositif fonctionnel présente un centre de gravité situé dans sa partie avant (opposée à la paroi inclinée), il a tendance à basculer par gravité vers l'avant une fois qu'il est supporté par les vis lors de son pré-maintien. Par conséquent, il existe une probabilité élevée qu'il s'échappe des vis pendant que le technicien le lâche temporairement pour récupérer l'outil de vissage.

Pour éviter qu'un tel échappement survienne, et donc la chute du dispositif fonctionnel, il est connu du document FR-A1-2 967 795 de loger un clip de pré-maintien à l'intérieur du passage de vis de la douille supérieure de l'embase. Ce clip de pré-maintien comprend généralement trois pattes de clippage, destinées à permettre son couplage à l'intérieur du passage de vis, et entre lesquelles sont intercalées trois griffes souples, destinées à être logées entre des portions voisines d'un filet d'une vis pour pré-maintenir l'embase par rapport à cette dernière vis. On comprendra en effet que lorsque ces griffes coopèrent avec le filet, elles constituent des espèces de butées anti-recul permettant de pré-maintenir le dispositif fonctionnel sur les vis en l'empêchant de s'échapper. La souplesse des griffes, qui est indispensable à la translation relative de la vis de pré-maintien, résulte non seulement de leur forme, mais également du matériau plastique utilisé (généralement un polyamide (comme par exemple le PA66.12)).

Hélas, pour certains dispositifs fonctionnels comprenant une embase en matière plastique, il n'est pas possible d'utiliser le clip de pré-maintien présenté ci-avant. Cela résulte généralement d'une raison économique et/ou de l'encombrement des douilles (elles doivent en effet être surdimensionnées pour pouvoir loger le clip de pré-maintien).

On est donc contraint de remplacer le clip de pré-maintien par trois griffes qui sont moulées à 120° dans le fond de la partie arrière d'une douille supérieure en même temps que l'on moule l'embase. La forme des trois griffes est similaire à celle du clip de pré-maintien traditionnel. Mais la matière forcément rigide, qui est utilisée pour réaliser l'embase et donc les griffes, ne permet pas de conférer à ces dernières la souplesse qu'elles possèdent dans le clip de pré-maintien traditionnel et donc le pré-maintien est de moins bonne qualité. En effet, les griffes sont endommagées (ou rognées) par le filetage lors de la translation relative de la vis par rapport à la douille supérieure, ce qui rend ces griffes inefficaces. De plus, lorsque l'extension radiale des griffes est trop grande cela induit un blocage de la douille supérieure par rapport à la vis, ce qui nuit au montage, et inversement lorsque l'extension radiale des griffes est trop petite le pré-maintien devient insuffisant.

L'invention a donc notamment pour but d'améliorer la situation.

Elle propose notamment à cet effet un dispositif fonctionnel, propre à être solidarisé à une paroi qui est inclinée par rapport à un plan horizontal et munie d'au moins deux vis, et présentant un centre de gravité situé dans une partie avant et comprenant dans une partie arrière une embase munie d'au moins une douille supérieure et une douille inférieure propres à être traversées par ces vis.

Ce dispositif fonctionnel défini dans la revendication 1 comprend au moins une douille supérieure comprenant un passage de vis qui est délimité par une face interne comportant dans une zone avant supérieure au moins une griffe rigide et propre à être logée entre deux portions voisines d'un filet d'une vis pour pré-maintenir l'embase par rapport à cette dernière vis.

On obtient ainsi un pré-maintien efficace et fiable du dispositif fonctionnel.

Le dispositif fonctionnel selon l'invention peut comporter d'autres caractéristiques qui peuvent être prises séparément ou en combinaison, et notamment :
- la zone avant supérieure de la face interne de la douille supérieure peut comprendre au moins deux griffes décalées angulairement et propres à être logées entre deux portions voisines du filet de la vis qui participe au pré-maintien ;
- la zone avant supérieure de la face interne de la douille supérieure peut comprendre au moins deux griffes décalées axialement et propres à être logées respectivement entre des portions voisines différentes du filet de la vis qui participe au pré-maintien ;
- la face interne de la douille supérieure peut comprendre au moins dans une zone arrière inférieure une protubérance dédiée au centrage de la vis qui participe au pré-maintien ;
- dans un premier mode de réalisation, la douille supérieure peut faire partie intégrante de l'embase ;
- la douille supérieure peut comprendre un insert métallique de forme générale cylindrique circulaire et sur lequel est surmoulé un enrobage définissant la face interne ;
   ➢ chaque griffe peut faire partie intégrante de l'enrobage ;
   ➢ en variante, chaque griffe peut faire partie intégrante de l'insert métallique et traverser l'enrobage ;
- la douille supérieure peut comprendre un manchon rapporté, immobilisé dans le passage de vis, définissant la face interne et comprenant chaque griffe ;
- la douille supérieure peut être une pièce rapportée, solidarisée fixement à l'embase ;
- il peut, par exemple, constituer un pédalier destiné à équiper un véhicule.

L'invention propose également un véhicule, éventuellement de type automobile, et comprenant au moins un dispositif fonctionnel du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et les niveaux de gris), sur lesquels :
- la figure 1 illustre schématiquement, dans une vue en coupe longitudinale, une partie d'un exemple de dispositif fonctionnel selon l'invention, au début de sa phase de solidarisation à des vis d'une paroi inclinée d'un véhicule,
- la figure 2 illustre schématiquement, dans une vue en coupe longitudinale, la douille supérieure du dispositif fonctionnel de la figure 1, au début de la phase de solidarisation,
- la figure 3 illustre schématiquement, dans une vue en coupe longitudinale, le dispositif fonctionnel de la figure 1, à un stade intermédiaire de sa phase de solidarisation pendant lequel il est pré-maintenu sur les vis,
- la figure 4 illustre schématiquement, dans une vue en coupe longitudinale, la douille supérieure du dispositif fonctionnel de la figure 1, dans le stade intermédiaire de pré-maintien,
- la figure 5 illustre schématiquement, dans une vue en coupe longitudinale, le dispositif fonctionnel de la figure 1, juste avant la fin de sa phase de solidarisation,
- la figure 6 illustre schématiquement, dans une vue en coupe longitudinale, la douille supérieure du dispositif fonctionnel de la figure 1, juste avant la fin de sa phase de solidarisation,
- la figure 7 illustre schématiquement, dans une vue de face, du côté de sa partie avant, la douille supérieure du dispositif fonctionnel de la figure 1,
- la figure 8 illustre schématiquement, dans une vue de face, du côté de sa partie arrière, la douille supérieure du dispositif fonctionnel de la figure 1, et
- la figure 9 illustre schématiquement, dans une vue de face, du côté de sa partie arrière, une variante de la douille supérieure du dispositif fonctionnel de la figure 1.

L'invention a notamment pour but de proposer un dispositif fonctionnel DF ayant un centre de gravité CG situé dans une partie avant PV1 et destiné à être solidarisé à une paroi PF qui est inclinée par rapport à un plan horizontal et qui fait partie d'un système.

Dans ce qui suit, on considère, à titre d'exemple non limitatif, que la paroi inclinée PF fait partie d'un véhicule, éventuellement automobile, comme par exemple une voiture. Mais l'invention n'est pas limitée à ce type d'application. En effet, un dispositif fonctionnel DF peut faire partie de n'importe quel système ayant au moins une paroi inclinée destinée à le supporter. Par conséquent, elle concerne notamment tout type de véhicule (terrestre, maritime (ou fluvial) ou aérien), tout type d'installation, y compris de type industriel, et tout matériel fabriqué en grande série (notamment les équipements électroménagers, les appareils de divertissement (ou consoles de jeux), et le mobilier).

Par ailleurs, on considère dans ce qui suit, à titre d'exemple non limitatif, que le dispositif fonctionnel DF est un pédalier d'un véhicule automobile, par exemple destiné à commander l'accélération ou le freinage. Mais l'invention n'est pas limitée à ce type de dispositif fonctionnel. Elle concerne en effet tout dispositif fonctionnel ayant un centre de gravité situé dans une partie avant (opposée à la paroi inclinée de support). Ainsi, dans un véhicule automobile, le dispositif fonctionnel pourra également être un boîtier comprenant au moins un module électronique, un bloc de climatisation, un réservoir de liquide (par exemple de lave-glace), ou une pièce d'habillage intérieur, par exemple.

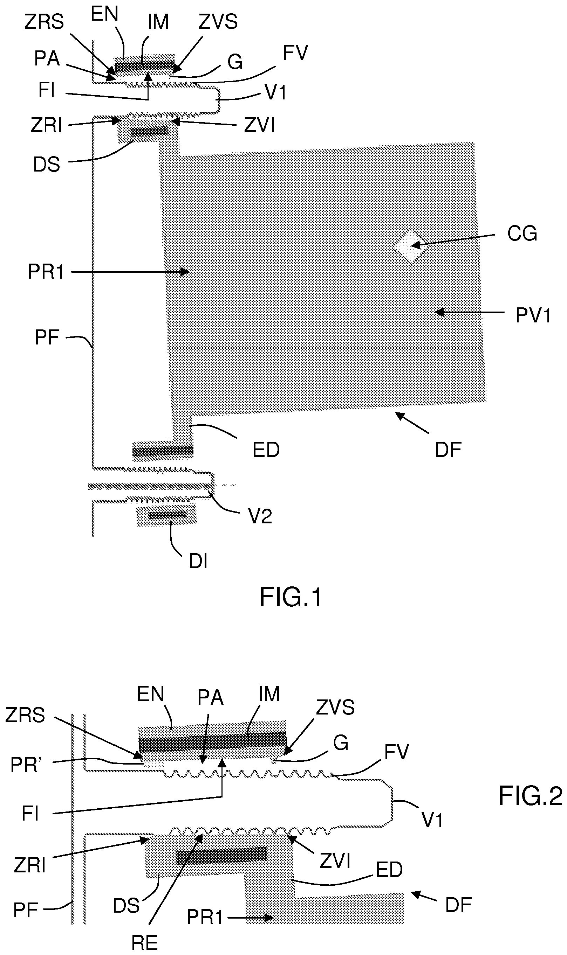

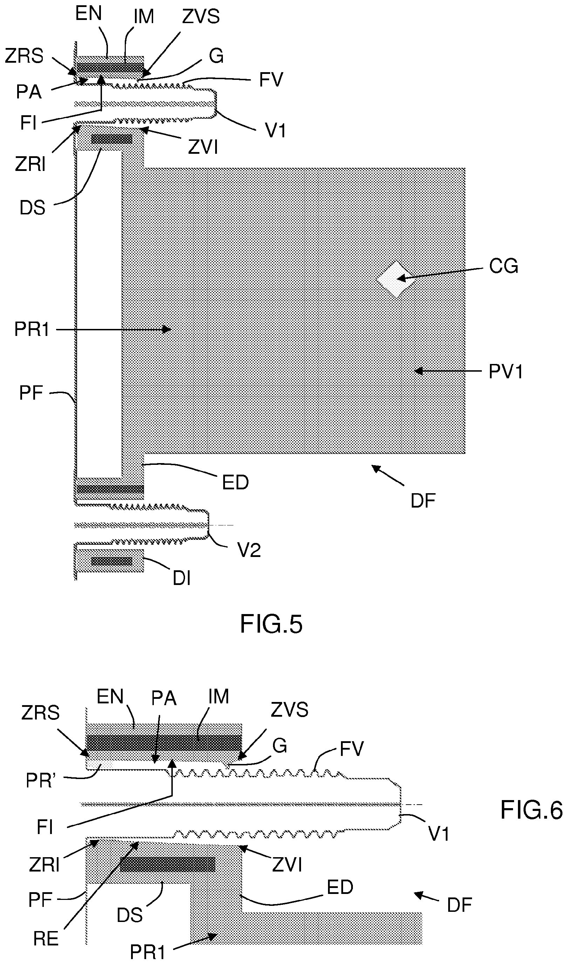

On a schématiquement représenté sur les figures 1, 3 et 5 une partie d'un exemple de dispositif fonctionnel DF selon l'invention et une partie d'une paroi PF destinée à supporter fixement ce dispositif fonctionnel DF et faisant ici partie d'un véhicule automobile.

La paroi de support PF est munie d'au moins deux vis Vj fixes, dont au moins une supérieure (V1 (j = 1)) et une inférieure (V2 (j = 2). Ces vis Vj sont destinées à permettre la solidarisation fixe (par vissage) du dispositif fonctionnel DF. Dans l'exemple illustré non limitativement, la paroi (de support) PF est sensiblement perpendiculaire au plan horizontal. Mais son inclinaison pourrait être inférieure à 90°. Par ailleurs, dans les vues en coupe illustrées non limitativement, la paroi (de support) PF ne comprend qu'une vis supérieure V1 et une vis inférieure V2. Mais elle pourrait comprendre plusieurs vis supérieures et/ou plusieurs vis inférieures.

Comme illustré, un dispositif fonctionnel DF, selon l'invention, comprend une partie avant PV1 dans laquelle est situé son centre de gravité CG et une partie arrière PR1 comprenant une embase ED. Cette dernière (ED) est munie d'au moins une douille supérieure DS et d'au moins une douille inférieure DI qui comprennent chacune un passage de vis PA propre à être traversé par une vis Vj correspondante de la paroi PF. On comprendra qu'ici la vis supérieure V1 traverse le passage de vis PA de la douille supérieure DS et la vis inférieure V2 traverse le passage de vis de la douille inférieure DI.

Dans ce qui suit et ce qui précède, la notion « d'arrière » désigne une partie ou zone d'un élément qui est orientée vers la paroi PF, et la notion « d'avant » désigne une autre partie ou zone de cet élément qui est orientée de façon opposée à la paroi PF.

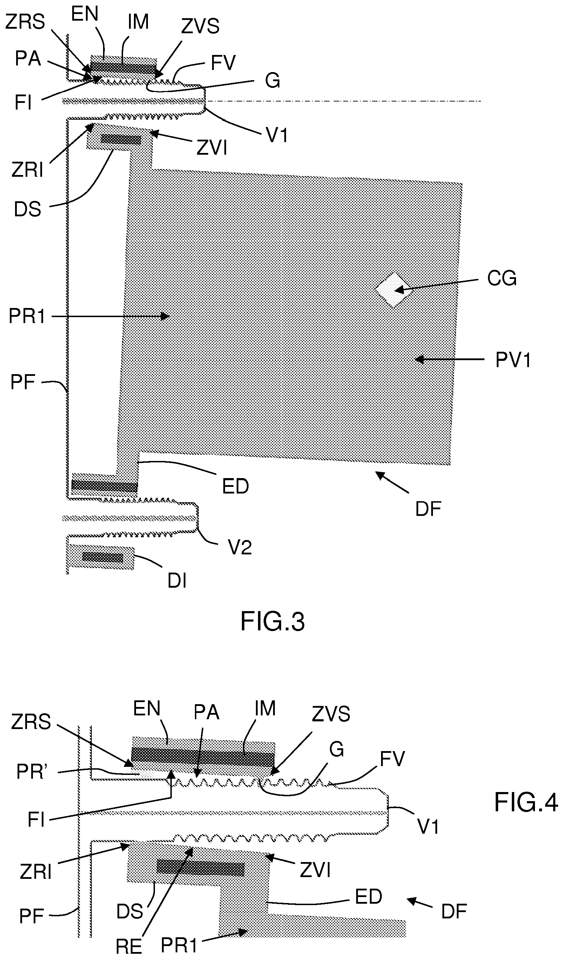

Selon l'invention, le passage de vis PA d'au moins une douille supérieure DS de l'embase ED est délimité par une face interne FI qui comporte dans une zone avant supérieure ZVS au moins une griffe G rigide et propre à être logée entre deux portions voisines du filet FV d'une vis supérieure V1 pour pré-maintenir l'embase ED par rapport à cette dernière (V1), comme illustré sur les figures 3 et 4.

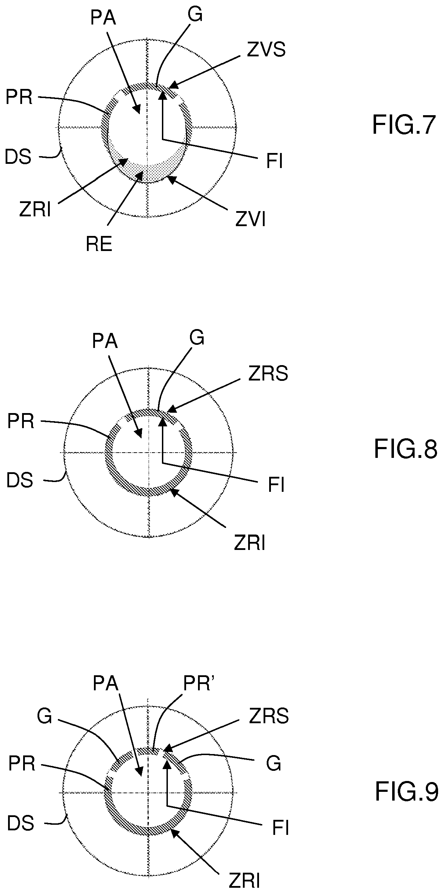

Selon l'invention et comme illustré sur les figures, ce passage de vis PA de cette douille supérieure DS présente dans une zone inférieure un rayon qui décroit d'une zone avant inférieure ZVI de la face interne FI vers une zone arrière inférieure ZRI de cette face interne FI pour faciliter la traversée de la vis supérieure V1 qui participe au pré-maintien, comme illustré sur les figures 1 à 7. Cette variation du rayon du passage de vis PA dans sa partie inférieure résulte de la forme que présente la partie inférieure de la face interne FI et qui définit une espèce de rampe d'engagement RE (voir figure 7). Cette dernière peut, par exemple, résulter d'une espèce d'ovalisation.

Cette dernière caractéristique technique, relative au rayon variable, sert principalement au début de la phase de solidarisation, et plus précisément pendant le couplage des douilles supérieure(s) DS et inférieure(s) DI aux vis Vj. Elle est destinée à éviter que la (chaque) griffe G empêche la translation en se logeant dans des portions voisines du filet FV. En effet, une fois qu'un technicien a placé les passage de vis PA des douilles DS et DI de l'embase ED devant les extrémités libres des vis Vj, il doit translater le dispositif fonctionnel DF vers la paroi PF en faisant traverser les douilles DS et DI par les vis Vj, jusqu'à ce qu'il estime que le dispositif fonctionnel DF peut être supporté par ces vis Vj. Pour éviter un blocage par la griffe G, le technicien redresse le dispositif fonctionnel DF vers le haut, comme illustré sur les figures 1 et 2, jusqu'à ce que la partie inférieure de la face interne FI de la douille supérieure DS soit sensiblement parallèle à la partie inférieure de la vis supérieure V1 (et éventuellement au contact de cette dernière). Cela permet en effet, d'écarter suffisamment la (chaque) griffe G de la partie supérieure de la vis supérieure V1.

La première caractéristique technique, relative à la présence d'au moins une griffe G dans la partie avant de la douille supérieure DS, sert principalement pendant un stade intermédiaire de la phase de solidarisation, et plus précisément pendant le pré-maintien sur les vis Vj. Elle est destinée à empêcher que le dispositif fonctionnel DF s'échappe des vis Vj pendant que le technicien le lâche temporairement pour récupérer l'outil de vissage, du fait de la présence de son centre de gravité CG dans sa partie avant PV1. On comprendra en effet, qu'une fois que le technicien lâche le dispositif fonctionnel DF qu'il vient de placer sur les vis Vj, le dispositif fonctionnel DF bascule par gravité vers l'avant jusqu'à ce que sa (chaque) griffe G se retrouve logée entre deux portions voisines du filet FV de la vis supérieure V1, ce qui l'empêche de se translater vers l'avant et donc le pré-maintien sur les vis Vj, comme illustré sur les figures 3 et 4.

Ensuite, le technicien peut placer des écrous sur les extrémités libres des vis Vj, puis redresser temporairement vers le haut le dispositif fonctionnel DF tout en le translatant vers la paroi PF afin qu'il soit centré sur les parties arrière non filetées des vis Vj, puis saisir son outil de vissage afin de visser les écrous selon le couple de serrage prévu.

En l'absence de la caractéristique technique relative au rayon variable, il est préférable que le passage de vis PA de la douille supérieure DS présente dans sa zone inférieure un rayon qui est sensiblement constant et égal à celui qu'il présente dans la zone avant inférieure ZVI de la face interne FI illustrée sur les figures.

On notera, comme illustré non limitativement sur la figure 9, que la zone avant supérieure ZVS de la face interne FI de la douille supérieure DS peut éventuellement comprendre au moins deux griffes G qui sont décalées angulairement (dans un même plan transversal (perpendiculaire au plan des dessins)) et propres à être logées entre deux portions voisines du filet FV de la vis supérieure V1 qui participe au pré-maintien. Cette option est destinée à renforcer le pré-maintien. Dans l'exemple illustré non limitativement sur la figure 9, la zone avant supérieure ZVS de la face interne FI de la douille supérieure DS comprend deux griffes G. Mais elle pourrait en comporter plus de deux, et par exemple trois.

On notera également, bien que cela n'apparaisse pas sur les figures, que la zone avant supérieure ZVS de la face interne FI de la douille supérieure DS peut éventuellement comprendre au moins deux griffes G décalées axialement (et donc placées dans des plans distants mais parallèles entre eux) et propres à être logées respectivement entre des portions voisines différentes du filet FV de la vis supérieure V1 qui participe au pré-maintien. Cette option, qui peut être éventuellement combinée à l'option décrite dans le paragraphe précédent, est également destinée à renforcer le pré-maintien.

On notera également, comme illustré non limitativement sur les figures 7 à 9, que la face interne FI de la douille supérieure DS peut comprendre au moins dans la zone arrière inférieure ZRI une protubérance PR dédiée au centrage de la vis supérieure V1 qui participe au pré-maintien dans le passage de vis PA. Ce centrage intervient dès l'engagement de la zone arrière inférieure ZRI sur la vis.

On notera également, comme illustré non limitativement sur la figure 9, que la face interne FI de la douille supérieure DS peut comprendre dans la zone arrière supérieure ZRS une autre protubérance PR' complétant le centrage annulaire réalisé par la protubérance PR de la zone arrière inférieure ZRI.

Dans l'exemple non limitatif illustré sur les figures 1 à 6, la douille supérieure DS fait partie intégrante de l'embase ED. Pour ce faire, la douille supérieure DS peut être soit entièrement réalisée dans le même matériau rigide que l'embase ED, éventuellement en même temps que cette dernière (ED), par exemple par moulage (ou injection) d'une matière plastique, soit partiellement réalisée dans le même matériau rigide que l'embase ED.

Dans la seconde alternative, illustrée sur les figures 1 à 6, la douille supérieure DS comprend un insert métallique IM de forme générale cylindrique circulaire et sur lequel est surmoulé un enrobage EN qui définit la face interne FI. Cet insert métallique IM est destiné à renforcer la rigidité et la résistance de la douille supérieure DS. Cet enrobage EN est réalisé dans le même matériau rigide que l'embase ED en même temps que cette dernière (ED), par exemple par moulage (ou injection).

Dans ce cas, chaque griffe G peut faire partie intégrante de l'enrobage EN, comme illustré non limitativement sur les figures 1 à 6, et donc peut être réalisée par moulage (ou injection) en même temps que l'embase ED. Dans une variante non représentée, chaque griffe G peut faire partie intégrante de l'insert métallique IM et donc traverse l'enrobage EN. Dans cette variante qui est destinée à augmenter la résistance de chaque griffe G, chaque griffe G peut, par exemple, être réalisée par emboutissage ou par frappe.

Dans une variante de réalisation, correspondant aux deux alternatives mais non représentée, la douille supérieure DS peut comprendre un manchon rapporté qui est immobilisé dans le passage de vis PA, définit la face interne FI et comprend chaque griffe G. Ce manchon rapporté est, par exemple, emmanché en force dans le passage de vis PA, ou bien comprend des moyens de blocage destinés à l'immobiliser fixement dans le passage de vis PA, en coopérant éventuellement avec d'autres moyens de blocage définis dans ce dernier (PA). Dans cette variante, le manchon rapporté peut être réalisé par moulage (ou injection) d'un matériau qui est identique ou différent de celui utilisé pour l'embase ED.

Egalement en variante de réalisation, la douille supérieure DS peut être une pièce rapportée, solidarisée fixement à l'embase ED, au lieu de faire partie intégrante de cette dernière (ED).

On notera également que les douilles, qui ne comportent pas de griffe G, peuvent faire partie intégrante de l'embase ED et soit être entièrement réalisées dans le même matériau rigide que l'embase ED en même temps que cette dernière (ED), soit comprendre un insert métallique de forme générale cylindrique circulaire et sur lequel est surmoulé un enrobage, comme illustré non limitativement sur les figures 1, 3 et 5. En variante, les douilles, qui ne comportent pas de griffe G, peuvent être des pièces rapportées, solidarisées fixement à l'embase ED.

On notera également que l'une au moins des douilles, qui ne comportent pas de griffe G, peut avantageusement comprendre un passage de vis dont la partie inférieure présente une variation de rayon (ou rampe d'engagement RE de FI) similaire à celle de la douille supérieure DS, de manière à faciliter la traversée de la vis correspondante au début de la phase de solidarisation et à éviter la génération de contrainte dans l'embase ED du fait de la présence de la rampe d'engagement RE dans la douille supérieure DS. Dans ce cas, il faut veiller au bon équilibre du dispositif fonctionnel DF lors de son basculement dans sa position finale d'immobilisation fixe.

On notera également que l'une des douilles, qui ne comportent pas de griffe G, peut avantageusement comprendre un passage de vis dont la section transverse est oblongue, de manière à offrir un degré de liberté suivant une direction de l'espace lors du couplage des douilles de l'embase ED aux vis Vj.

On notera également que dans l'exemple non limitatif illustré sur les figures 1 à 6 le dispositif fonctionnel DF ne comprend qu'une seule douille supérieure DS comprenant au moins une griffe avant G et une rampe d'engagement RE. Mais le dispositif fonctionnel DF pourrait comprendre deux douilles supérieures DS à griffe(s) avant G et rampe d'engagement RE.

L'invention offre plusieurs avantages, parmi lesquels :
- elle permet d'obtenir un pré-maintien efficace et fiable pour les dispositifs fonctionnels ayant une embase en plastique,
- elle permet de faciliter le montage du dispositif fonctionnel, tout en conservant le mode de réalisation d'au moins son embase,
- elle s'avère économique puisqu'il n'y a pas de clip de pré-maintien à utiliser.

## Revendications

1. Dispositif fonctionnel (DF) propre à être solidarisé à une paroi (PF) inclinée par rapport à un plan horizontal et munie d'au moins deux vis (Vj), ledit dispositif (DF) présentant un centre de gravité (CG) situé dans une partie avant (PV1 ) et comprenant dans une partie arrière (PR1 ) une embase (ED) munie d'au moins une douille supérieure (DS) et une douille inférieure (DI) propres à être traversées par lesdites vis (Vj), au moins une douille supérieure (DS) comprenant un passage de vis (PA) délimité par une face interne (FI) comportant dans une zone avant supérieure (ZVS) au moins une griffe (G) rigide et propre à être logée entre deux portions voisines d'un filet d'une vis (V1 ) pour pré-maintenir ladite embase (ED) par rapport à cette dernière (V1 ) , ledit passage de vis (PA) de la douille supérieure (DS) présentant dans une zone inférieure un rayon décroissant d'une zone avant inférieure (ZVI) vers une zone arrière inférieure (ZRI) pour faciliter la traversée de ladite vis (V1 ) participant audit pré-maintien.

2. Dispositif selon la revendication 1, **caractérisé en ce que** ladite zone avant supérieure (ZVS) de la face interne (FI) de la douille supérieure (DS) comprend au moins deux griffes (G) décalées angulairement et propres à être logées entre deux portions voisines dudit filet de ladite vis (V1) participant audit pré-maintien.

3. Dispositif selon l'une des revendications 1 à 2, **caractérisé en ce que** ladite zone avant supérieure (ZVS) de la face interne (FI) de la douille supérieure (DS) comprend au moins deux griffes (G) décalées axialement et propres à être logées respectivement entre des portions voisines différentes dudit filet de ladite vis (V1) participant audit pré-maintien.

4. Dispositif selon l'une des revendications 1 à 3, **caractérisé en ce que** ladite face interne (FI) de la douille supérieure (DS) comprend au moins dans une zone arrière inférieure (ZRI) une protubérance (PR) dédiée au centrage de ladite vis (V1) participant audit pré-maintien.

5. Dispositif selon l'une des revendications 1 à 4, **caractérisé en ce que** ladite douille supérieure (DS) comprend un insert métallique (IM) de forme générale cylindrique circulaire et sur lequel est surmoulé un enrobage (EN) définissant ladite face interne (FI).

6. Dispositif selon la revendication 5, **caractérisé en ce que** chaque griffe (G) fait partie intégrante dudit enrobage (ED).

7. Dispositif selon la revendication 5, **caractérisé en ce que** chaque griffe (G) fait partie intégrante dudit insert métallique (IM) et traverse ledit enrobage (ED).

8. Dispositif selon l'une des revendications 1 à 5, **caractérisé en ce que** ladite douille supérieure (DS) comprend un manchon rapporté, immobilisé dans ledit passage de vis (PA), définissant ladite face interne (FI) et comprenant chaque griffe (G).

9. Dispositif selon l'une des revendications 1 à 8, **caractérisé en ce qu'**il constitue un pédalier destiné à équiper un véhicule.

## Patentansprüche

1. Funktionelle Vorrichtung (DF), die zur Befestigung an einer bezüglich einer horizontalen Ebene geneigten Wand (PF) geeignet ist und mit mindestens zwei Schrauben (Vj) versehen ist, wobei die Vorrichtung (DF) einen Schwerpunkt (CG) hat, der sich darin befindet einen vorderen Teil (PV1) und umfassend in einem hinteren Teil (PR1) eine Basis (ED), die mit mindestens einer oberen Buchse (DS) und einer unteren Buchse (DI) versehen ist, die zum Durchführen der Schrauben (Vj) geeignet ist, bei mindestens eine obere Hülse (DS), die einen Schraubendurchgang (PA) umfasst, der von einer Innenfläche (FI) begrenzt ist, die in einem oberen vorderen Bereich (ZVS) mindestens eine starre Klaue (G) umfasst, die geeignet ist, zwischen zwei benachbarten Abschnitten eines Gewindes aufgenommen zu werden einer Schraube (V1) zum Vorhalten der Basis (ED) in Bezug auf letztere (V1), wobei der Schraubendurchgang (PA) der oberen Hülse (DS) in einem unteren Bereich einen Radius aufweist, der von einem unteren vorderen Bereich abnimmt (ZVI) hin zu einer unteren hinteren Zone (ZRI), um das Überqueren der Schraube (V1) aus zu erleichtern hiermit Audit Vorwartung.

2. Vorrichtung nach Anspruch 1, **dadurch gekennzeichnet ,dass** der obere vordere Bereich (ZVS) der Innenfläche (FI) der oberen Hülse (DS) mindestens zwei Klauen (G) umfasst, die winkelversetzt und dazu geeignet sind, zwischen zwei benachbarten Klauen aufgenommen zu werden Abschnitte des Gewindes der Schraube (V1), die an dem Vorhalten teilnehmen.

3. Vorrichtung nach einem der Ansprüche 1 bis 2, **dadurch gekennzeichnet** der obere vordere Bereich (ZVS) der Innenfläche (FI) der oberen Hülse (DS) mindestens zwei Klauen (G) umfasst, die axial versetzt sind und jeweils zwischen verschiedenen benachbarten Abschnitten des Gewindes der Schraube (V1) aufgenommen werden können. Teilnahme am Vorwartungsaudit.

4. Vorrichtung nach einem der Ansprüche 1 bis 3, **dadurch gekennzeichnet, dass** die Innenfläche (FI) der oberen Hülse (DS) zumindest in einem unteren hinteren Bereich (ZRI) einen Vorsprung (PR) aufweist, der der Zentrierung derselben dient Schraube (V1), die an der Vorhaltung teilnimmt.

5. Vorrichtung nach einem der Ansprüche 1 bis 4, **dadurch gekennzeichnet, dass** die obere Hülse (DS) einen Metalleinsatz (IM) von allgemein kreiszylindrischer Form umfasst, auf dem eine Beschichtung (EN) geformt ist, die die Innenfläche (FI) definiert..

6. Vorrichtung nach Anspruch 5, **dadurch gekennzeichnet, dass** jede Klaue (G) ein integraler Teil der Beschichtung (ED) ist.

7. Vorrichtung nach Anspruch 5, **dadurch gekennzeichnet, dass** jede Klaue (G) ein integraler Bestandteil des Metalleinsatzes (IM) ist und die Beschichtung (ED) durchdringt.

8. Vorrichtung nach einem der Ansprüche 1 bis 5, **dadurch gekennzeichnet, dass** die obere Hülse (DS) eine angebrachte Hülse umfasst, die in dem Schraubendurchgang (PA) immobilisiert ist, die Innenfläche (FI) definiert und jede Klaue (G) umfasst.

9. Vorrichtung nach einem der Ansprüche 1 bis 8, **dadurch gekennzeichnet, dass** sie eine Pedaleinheit bildet, die dazu bestimmt ist, ein Fahrzeug auszustatten.

## Claims

1. Functional device (DF) adapted to be secured to a wall (PF) inclined with respect to a horizontal plane and provided with at least two screws (Vj), said device (DF) having a center of gravity (CG) located in a front part (PV1) and comprising in a rear part (PR1) a base (ED) provided with at least one upper bushing (DS) and a lower bushing (DI) suitable for the said screws (Vj) to pass through, at least one upper sleeve (DS) comprising a screw passage (PA) delimited by an internal face (FI) comprising in an upper front zone (ZVS) at least one rigid claw (G) adapted to be housed between two neighboring portions of a thread of a screw (V1) to pre-hold said base (ED) with respect to the latter (V1), said screw passage (PA) of the upper sleeve (DS) having in a lower zone a radius decreasing from a lower front zone (ZVI) towards a lower rear zone (ZRI) to facilitate the crossing of said screw (V1) participating in the pre-maintenance audit.

2. Device according to claim 1, **characterized in that** said upper front zone (ZVS) of the inner face (FI) of the upper sleeve (DS) comprises at least two claws (G) angularly offset and adapted to be housed between two neighboring portions of said thread of said screw (V1) participating in the pre-maintenance audit.

3. Device according to one of claims 1 to 2, **characterized in that** said upper front zone (ZVS) of the internal face (FI) of the upper sleeve (DS) comprises at least two claws (G) offset axially and capable of being housed respectively between different neighboring portions of said thread of said screw (V1) participating in the pre-maintenance audit.

4. Device according to one of claims 1 to 3, **characterized in that** said internal face (FI) of the upper sleeve (DS) comprises at least in a lower rear zone (ZRI) a protrusion (PR) dedicated to the centering of said screw (V1) participating in the pre-maintenance audit.

5. Device according to one of claims 1 to 4, **characterized in that** said upper sleeve (DS) comprises a metal insert (IM) of generally circular cylindrical shape and on which is molded a coating (EN) defining said internal face ( FI).

6. Device according to claim 5, **characterized in that** each claw (G) is an integral part of said coating (ED).

7. Device according to claim 5, **characterized in that** each claw (G) is an integral part of said metal insert (IM) and passes through said coating (ED).

8. Device according to one of claims 1 to 5, **characterized in that** said upper sleeve (DS) comprises an attached sleeve, immobilized in said screw passage (PA), defining said internal face (FI) and comprising each claw (G).

9. Device according to one of claims 1 to 8, **characterized in that** it constitutes a pedal assembly intended to equip a vehicle.
